Europäisches Patentamt

European Patent Office

Office européen des brevets

(19)

(11) Numéro de publication: **0 274 675 B1**

(12) **FASCICULE DE BREVET EUROPEEN**

(45) Date de publication de fascicule du brevet:
**11.12.91**

(51) Int. Cl.⁵: **B62J 6/00**

(21) Numéro de dépôt: **87118257.2**

(22) Date de dépôt: **09.12.87**

(54) **Dispositif d'éclairage pour bicyclette.**

(30) Priorité: **10.12.86 FR 8617278**

(43) Date de publication de la demande:
**20.07.88 Bulletin 88/29**

(45) Mention de la délivrance du brevet:
**11.12.91 Bulletin 91/50**

(84) Etats contractants désignés:
**AT BE CH DE ES FR GB GR IT LI LU NL SE**

(56) Documents cités:
**BE-A- 650 193          DE-A- 2 953 938**
**NL-C- 88 841           US-A- 2 694 138**
**US-A- 3 603 928        US-A- 3 969 621**

(73) Titulaire: **CIPEL**
**6, rue Emile Pathé, B.P. 68**
**F-78400 Chatou(FR)**

Titulaire: **WONDER**
**6, rue Emile Pathé**
**F-78400 Chatou(FR)**

(72) Inventeur: **Lievin, Robert**
**Cidex 18 Mézières en Vexin**
**F-27510 Tourny(FR)**

(74) Mandataire: **Phélip, Bruno et al**
**c/o Cabinet Harlé & Phélip 21, rue de La**
**Rochefoucauld**
**F-75009 Paris(FR)**

EP 0 274 675 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un dispositif d'éclairage pour bicyclette comme précisé dans la première partie de la revendication 1 et destiné en particulier à être disposé à l'arrière de celle-ci.

Un tel dispositif comprend essentiellement un réflecteur concave et un source lumineuse, constituée généralement par le filament d'une ampoule, par exemple à incandescence, situé sensiblement au foyer du réflecteur. Ce dernier présente en son centre une ouverture munie d'un support pour la collerette de l'ampoule. Il renvoie les rayons qu'il reçoit de la source en un premier faisceau lumineux relativement concentré approximativement parallèle émis dans une direction sensiblement horizontale ; une autre partie des rayons sort directement sous forme d'un faisceau conique dispersé dont l'axe correspond à l'axe optique du réflecteur.

Dans certaines utilisations, on prévoit un réflecteur présentant un ajour dans sa partie supérieure de manière à laisser passer un faisceau divergent issu directement du filament, et orienté verticalement. On constate toutefois que l'angle solide de ce faisceau vertical est insuffisant car il est occulté partiellement par le bord du support de l'ampoule.

On a proposé diverses solutions pour remédier à cet inconvénient.

Selon le brevet américain US-A- 2 694 138, on a mis en oeuvre une seconde source lumineuse, ce qui accroît l'encombrement du dispositif et la consommation d'énergie.

On a fixé un miroir à l'extérieur du réflecteur pour modifier l'orientation des rayons sensiblement verticaux issus directement du filament ; cette disposition présente des difficultés de montage et la mise en place du miroir ne peut être réalisée avec suffisamment de précision.

On a utilisé enfin des prismes susceptibles de dévier le faisceau lumineux, mais il en résulte une grande perte de lumière par absorption.

On constate en outre pour les deux dernières solutions que la répartition lumineuse du faisceau dévié n'est pas homogène.

Les documents NL-C- 88841 et BE-A- 650193 proposent d'autres méthodes de production de deux faisceaux.

La présente invention a pour but d'apporter une solution plus simple et plus fiable que les dispositions antérieures.

La présente invention a pour objet un dispositif d'éclairage pour bicyclette comportant un réflecteur concave, une source lumineuse disposée sensiblement au foyer dudit réflecteur et constituée par le filament d'une ampoule, ledit réflecteur présentant au moins un ajour dans sa surface permettant l'émission directe par ladite source d'un faisceau secondaire, caractérisé par le fait que ledit réflecteur comporte en outre au moins un miroir secondaire situé au bord de sa face interne, et orienté de façon à envoyer des rayons issus de ladite source à travers ledit ajour, formant avec ledit réflecteur une pièce unitaire, et orienté de manière à accroître l'angle solide dudit faisceau secondaire.

On peut mettre en oeuvre plusieurs ajours et plusieurs miroirs secondaires coopérant respectivement avec lesdits ajours. La pièce unitaire réflecteur-miroirs est obtenue avantageusement par moulage ou formage.

La partie réfléchissante de cette pièce peut être réalisée par polissage ou métallisation. Les miroirs peuvent être plans, concaves ou convexes.

D'autres caractéristiques et avantages de la présente invention apparaîtront au cours de la description suivante d'un mode de réalisation donné à titre illustratif, mais nullement limitatif. Dans le dessin annexé :

- la figure 1 est une vue schématique en coupe transversale d'un dispositif selon l'invention, comportant un seul miroir secondaire,
- la figure 2 est une vue schématique de dessus du réflecteur avec son ajour, appartenant au dispositif de la figure 1,
- la figure 3 est une vue très schématique d'une bicyclette munie du dispositif selon l'invention,
- la figure 4 est une vue en coupe par un plan horizontal du faisceau lumineux vertical émis par le dispositif selon l'invention illustré dans la figure 3.

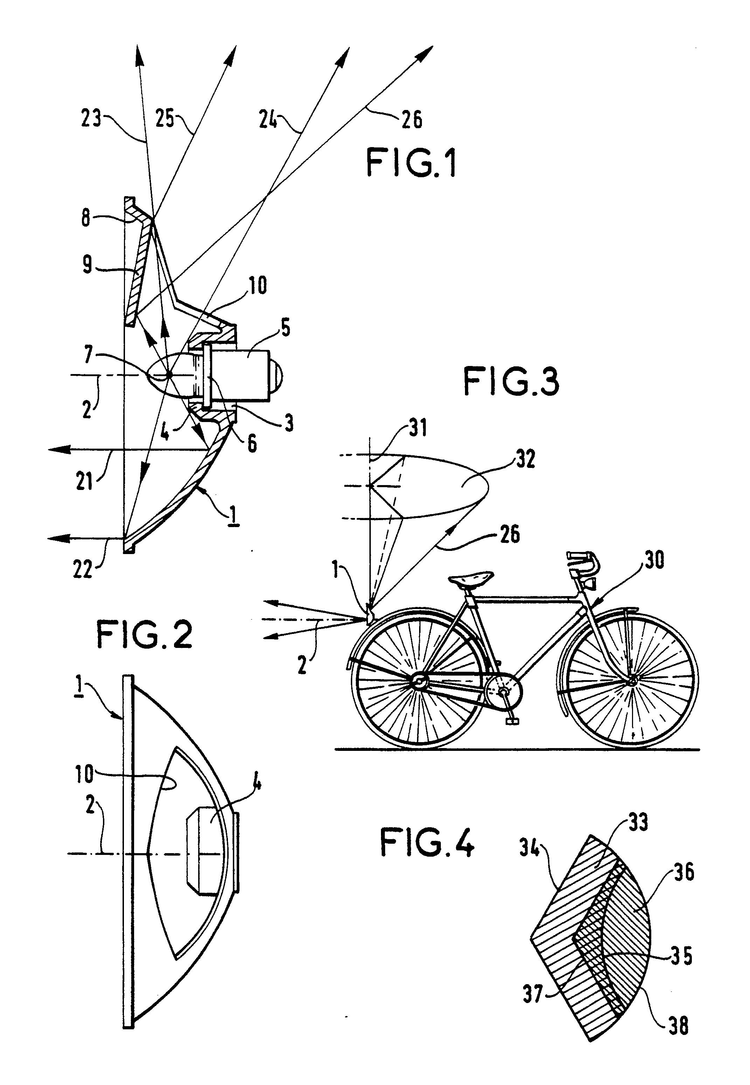

On voit dans la figure 1 un réflecteur concave 1 dont l'axe optique est référencé 2, et qui présente en son centre une ouverture 3, munie d'un support 4 pour une ampoule 5. C'est la collerette 6 de l'ampoule 5 qui est bloquée sur le support 4, pour que le filament 7 soit situé sensiblement au foyer du réflecteur 1. Un ergot porté par le support 4 et coopérant avec une encoche de la collerette 6 assure une orientation correcte du filament 7. Un ajour 10 prévu dans la partie supérieure du réflecteur 1 est particulièrement visible dans la figure 2.

Le filament 7 émet donc trois types de faisceaux lumineux :

- un faisceau conique divergent d'axe 2 comprenant tous les rayons qui ne tombent pas sur la surface réfléchissante du réflecteur, ni dans l'ajour,
- un faisceau parallèle à l'axe 2 après réflexion sur le réflecteur 1 (voir par exemple rayons émergents 21, 22), l'axe 2 étant horizontal dans la position normale d'utilisation,
- un faisceau divergent passant à travers l'ajour 10 (voir par exemple rayons émergents 23, 24) et de direction moyenne sensiblement verticale.

On observe que l'angle solide de ce dernier faisceau est limité par le support 4 de l'ampoule 5 (rayon limite 24). Selon l'invention, on prévoit au niveau du bord 8 du réflecteur 1, à l'intérieur de ce dernier, un miroir 9, que l'on a illustré plan, mais qui pourrait être convexe ou concave. Ce miroir est orienté de telle sorte que des rayons issus du filament 7 ressortent par l'ajour 10 après réflexion, de manière à accroître l'angle solide précité (voir rayons 25 et 26).

Le réflecteur 1 et le miroir 9 ne forment qu'une pièce unitaire réalisée par moulage ou formage.

Les surfaces réfléchissantes de cet ensemble unitaire sont polies et/ou métallisées - de manière à présenter un coefficient de réflexion compris entre 70 % et 100 %.

On voit dans la figure 3 une bicyclette 30 munie de son dispositif d'éclairage dont on a référencé le réflecteur 1 avec son axe 2 en position horizontale ; l'axe 31 montre la direction verticale et le faisceau 32 est issu de l'ajour 10. Le rayon extrême 26 fait environ un angle de 45° avec l'axe vertical 31.

La figure 4 est une coupe du faisceau 32 par un plan horizontal. La zone 33 comprise entre la ligne 34 et la ligne 35 correspond au faisceau issu directement du filament 7 (art antérieur). La zone 36 comprise entre la ligne 37 et la ligne 38 correspond au faisceau réfléchi par le miroir 9 et passant par l'ajour 10 selon l'invention.

On obtient donc une meilleure répartition de la lumière dans une zone sensiblement verticale.

Bien entendu l'inclinaison de cette zone par rapport à l'horizontale peut être choisie selon les besoins ; on modifiera donc en conséquence la position de l'ajour 10 et l'orientation du miroir 9.

L'angle du rayon extrême pourrait faire 90° et même être porté à 180°.

On a décrit un réflecteur muni d'un miroir secondaire, mais il pourrait en comporter plusieurs coopérant chacun avec un ajour en fonction de la répartition lumineuse choisie pour les faisceaux émis.

**Revendications**

1. Dispositif d'éclairage pour bicyclette comportant un réflecteur concave, une source lumineuse disposée sensiblement au foyer dudit réflecteur et constituée par le filament d'une ampoule, ledit réflecteur (1) présentant au moins un ajour (10) dans sa surface permettant l'émission par ladite source d'un faisceau secondaire, caractérisé par le fait que ledit réflecteur (10) comporte en outre au moins un miroir secondaire (9) situé au bord (8) de sa face interne, formant avec ledit réflecteur une pièce unitaire, et orienté de manière à envoyer des rayons issus de ladite source (7) à travers ledit ajour (10), de façon à accroître l'angle solide dudit faisceau secondaire (23, 24).

2. Dispositif d'éclairage selon la revendication 1, caractérisé par le fait qu'il comporte plusieurs ajours et plusieurs miroirs secondaires coopérant respectivement avec lesdits ajours.

3. Dispositif d'éclairage selon l'une des revendications 1 et 2, caractérisé par le fait que la pièce unitaire réflecteur-miroirs est obtenue par moulage ou formage.

4. Dispositif d'éclairage selon l'une des revendications précédentes, caractérisé par le fait que la pièce unitaire formée par ledit réflecteur et le/ou lesdits miroirs a une surface réfléchissante obtenue par polissage et/ou métallisation.

5. Dispositif d'éclairage selon la revendication 1, caractérisé par le fait que ladite source est susceptible d'émettre un faisceau principal d'axe horizontal (2), ledit faisceau secondaire ayant un axe sensiblement vertical.

**Claims**

1. Lighting device for a bicycle comprising a concave reflector, a light source disposed substantially at the focus of said reflector and constituted by the filament of a bulb, said reflector (1) having at least one window (10) in its surface allowing the emission by said source of a secondary beam, characterized by the fact that said reflector (1) further includes at least one secondary mirror (9) situated at the border (8) of its inside side, forming an integral part with said reflector, and orientated in a such manner 10 as to direct light rays from said source (7) through said window (10), thereby increasing the solid angle of said secondary beam (23,24).

2. Lighting device according to claim 1, characterized by the fact that it includes several windows and several secondary mirrors cooperating respectively with said windows.

3. Lighting device according to one of claims 1 and 2, characterized by the fact that the integral reflector-mirrors part is obtained by molding or by forming.

4. Lighting device according to one of the preceding claims, characterized in that the integral part formed by said reflector and said mirror or mirrors has a reflecting surface which is obtained by polishing and/or metallization.

**EP 0 274 675 B1**

5. Lighting device according to claim 1, characterized in that said source is capable of emetting a main beam having a horizontal axis (2), said secondary beam having a substantially vertical axis.

## Patentansprüche

1. Beleuchtungseinrichtung für ein Fahrrad mit einem konkaven Reflektor und einer Lichtquelle, die sich im wesentlichen im Brennpunkt des Reflektors befindet und aus dem Glühfaden einer Lampe besteht, wobei der Reflektor (1) mindestens ein Fenster (10) in seiner Oberfläche aufweist, durch das ein Sekundärlichtstrahl von der Quelle ausgesandt werden kann, dadurch gekennzeichnet, daß der Reflektor (1) außerdem mindestens einen Sekundärspiegel (9) aufweist, der am Rand (8) seiner Innenseite angeordnet ist und mit dem Reflektor ein Stück bildet sowie so angeordnet ist, daß er von der Quelle (7) ausgehende Strahlen durch das Fenster (10) lenkt, so daß der Abstrahlungswinkel des Sekundärstrahls (23, 24) vergrößert wird.

2. Beleuchtungseinrichtung nach Anspruch 1, dadurch gekennzeichnet, daß sie mehrere Fenster und mehrere Sekundärspiegel aufweist, die je mit einem der Fenster zusammenwirken.

3. Beleuchtungseinrichtung nach einem der Ansprüche 1 und 2, dadurch gekennzeichnet, daß das den Reflektor und die Spiegel bildende Bauteil ein gegossenes oder geformes Bauteil ist.

4. Beleuchtungseinrichtung nach einem der vorhergehenden Ansprüche, dadurch gekennzeichnet, daß das vom Reflektor und dem Spiegel bzw. den Spiegeln gebildete Bauteil eine durch Polieren und/oder Metallbeschichtung gebildete reflektierende Oberfläche besitzt.

5. Beleuchtungseinrichtung nach Anspruch 1, dadurch gekennzeichnet, daß die Quelle einen Hauptstrahl mit waagrechter Achse (2) auszusenden vermag, während der Sekundärstrahl eine im wesentlichen senkrechte Achse besitzt.

FIG.1

FIG.2

FIG.3

FIG.4